# EUROPEAN PATENT APPLICATION

(11) **EP 0 921 644 A1**
(43) Date of publication of application: **09.06.1999**
(21) Application number: 98123289.5
(22) Date of filing: 07.12.1998
(51) Int. Cl.: H04B 7/005

(54) **Method of transmission power control in mobile communication system**

(30) Priority: 08.12.1997 JP 33687997
(71) Applicant: NEC CORPORATION, Tokyo (JP)
(72) Inventor: Aihara, Makoto, Minato-ku, Tokyo (JP); Yahagi, Masahiko, Minato-ku, Tokyo (JP)
(74) Representative: Glawe, Delfs, Moll & Partner

(57) **Abstract**

A mobile communication system by using the code division multiple access (CDMA), wherein a mobile station transmits an access message at first in small power through a control channel to a base station, then increases gradually the transmission power until it receives a response from the base station in order to communicate with minimum transmission power, a mobile station notifies a base station of an access message and of the mobile station transmission power, and a base station calculates an initial value of the base station transmission power which is necessary for the base station to transmit at the beginning of the communication through the communication channel assigned to the mobile station. Here, the initial power is calculated on the basis of mobile station transmission power added to the received access message from the mobile station.

## Description

### BACKGROUND OF THE INVENTION

### 1. Technical Field of the Invention

The present invention relates to a method of transmission power control in a base station and particularly, a method of transmission power control in a base station in a mobile communication system under a code division miltiple access (CDMA) by using spectrum spread signals.

### 2. Description of the Prior Art

When a mobile station transmits signals to a base station in a mobile communication system under CDMA system, the mobile station at first transmits an access message with small transmission power through a control channel to the base station. The mobile station repeats transmitting the access message, increasing gradually the transmission power for the access message, until the mobile station receives a response from the base station, whereby the mobile station can transmit the access message to the base station with minimum transmission power ( IS-95-A+TSB74-6, 1.2.3.1 Estimated Open Loop Power). The base station which received the access message from the mobile station assigns a communication channel to the mobile station and then, starts communicating with the mobile station. Hereinafter, the following, mobile station transmission power is defined as power for transmitting signals from a mobile station to a base station, while base station transmission power is defined as power for transmitting signals from a base station to a mobile station

Hitherto, the base station transmission power at the beginning of communication or the initial base station transmission power has a constant value of power prescribed on the basis of several factors such as a dimension of a service area which is covered by the base station.

Further, the base station adjusts the base station transmission power on the basis of a report from the mobile station which contains an error rate of signals, or power of the signals received by the mobile station, after the base station assigns a communication channel to the mobile station and then, requests the communication status report as mentioned above.

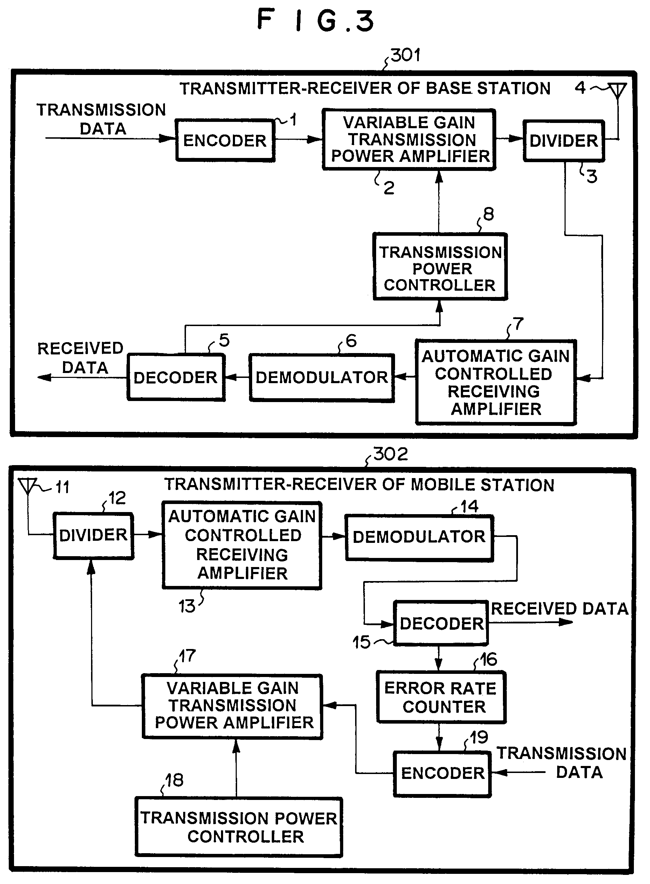

Figure 3 is a block diagram of transmitters/ receivers of the mobile station and base station in a conventional mobile communication system, wherein the base station transmission power is controlled.

Conventionally, the initial base station transmission power has a constant value of power prescribed on the basis of several factors such as a dimension of a service area which is covered by the base station. Further, the base station adjusts the base station transmission power on the basis of a report from the mobile station which contains an error rate or of signals or power of the signals received by the mobile station, after the base station assigns a communication channel to the mobile station and then, requests the communication status report as mentioned above.

However, the transmission power necessary for communication between a mobile station and a base station in a service area is not always equal to the prescribed value. Therefore, the initial base station transmission power runs in excess or in deficiency. Interference power to the other communication channel becomes increased, when the initial base station transmission power is in excess, while Interference power from the other communication channel becomes increased, when the initial base station transmission power is in deficiency.

Accordingly, the communication quality is degraded and the capacity of communication channels are decreased in the conventional control system of transmission power, because it takes time to reach suitable transmission power.

### SUMMARY OF THE INVENTION

Therefore, an object of the present invention is to suppress the interference power to other communication channel and to prevent the interference from other station by communicating with the optimum transmission power from a base station in a communication channel assigned to a mobile station, whereby the communication quality is improved and the capacity of communication channel is increased.

According to the present invention, there is provided a mobile communication system by using the code division multiple access (CDMA), wherein a mobile station transmits an access message at first in small power through a control channel to a base station, then increases gradually the transmission power until it receives a response from the base station in order to communicate with minimun transmission power. The communication system of the present invention comprises a notification means for notifying a base station of an access message and of the mobile station transmission power, and a calculation means for calculating an initial value of the base station transmission power which is necessary for the base station to transmit at the beginning of the communication through the communication channel assigned to the mobile station, wherein the initial power is calculated on the basis of mobile station transmission power added with the received access message from the mobile station.

The calculation means in the base station prepares beforehand a transmission power table which is allowed the mobile station transmission power and the base station transmission power to correspond to each other, refers to the power table on the basis of the data of the mobile station transmission power added to the access message from the mobile station to find the initial value of the base station transmission power .

Further, the calculation means in the base station renews the initial power on the basis of the report of the mobile station transmission power after the beginning of the transmission from the mobile station.

The first effect of the present invention lies in that the present invention suppresses the interference power to other communication channels and the interference from other stations by communicating, from the beginning of communication, with the optimum transmission power from a base station in a communication channel assigned to a mobile station.

This is because the base station communicates with the mobile station, using the optimum transmission power from the beginning of communication, in a communication channel assigned to a mobile station, by calculating the initial base station transmission power on the basis of the data of the mobile station transmission power added to the access message from the mobile station .

The second effect of the present invention lies in that the initial base station transmission power is accurately decided by an easy process without any rigorous calculation concerning the electro-magnetic theory of propagation.

This is because the base station prepares beforehand a transmission power table which is allowed the mobile station transmission power and the base station transmission power to correspond to each other, refers to the power table on the basis of the data of the mobile station transmission power added to the access message from the mobile station to find the initial value of the base station transmission power, and because the base station renews the initial power on the basis of the report of the mobile station transmission power after the beginning of the transmission from the mobile station .

### BRIEF EXPLANATION OF THE DRAWINGS

Figure 1 is a block diagram of transmitter-receiver of base station 101 and transmitter-receiver of mobile station 102 of the method of transmission power control of the present invention.
Figure 2 is an example of a power table.
Figure 3 is a block diagram of transmitters/ receivers of the mobile station and base station in a conventional mobile communication system, wherein the base station transmission power is controlled.

### PREFERRED EMBODIMENT OF THE INVENTION

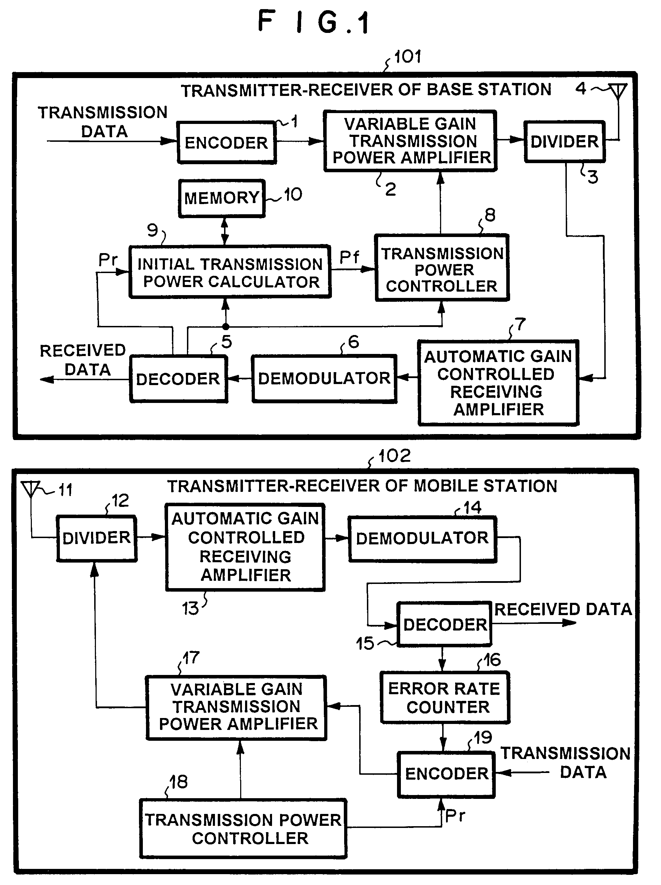

A preferred embodiment of the present invention is explained. As shown in Figure 1, a transmitter of transmitter-receiver of base station 101 comprises encoder 1, variable gain transmitting amplifier 2, transmission power controller 8, initial transmission power calculator 9, and memory 10. The transmitter of the base station is connected with divider 3 to transmits signals from antenna 4, while a receiver of transmitter-receiver of base station 101 comprises decoder 5, demodulator 6, and automatic gain controlled receiving amplifier 7, which is connected through divider 3 with antenna 4.

Likewise, a transmitter of transmitter-receiver of mobile station 102 comprises encoder 1, variable gain transmitting amplifier 17, transmission power controller 18, and encoder 19. The transmitter of the mobile station is connected with divider 12 to transmits signals from antenna 11, while a receiver of transmitter-receiver of mobile station 102 comprises automatic gain controlled receiving amplifier 13, demodulator 14, decoder 15, and error rate counter 16. The receiver of the mobile station is connected through divider 12 with antenna 11.

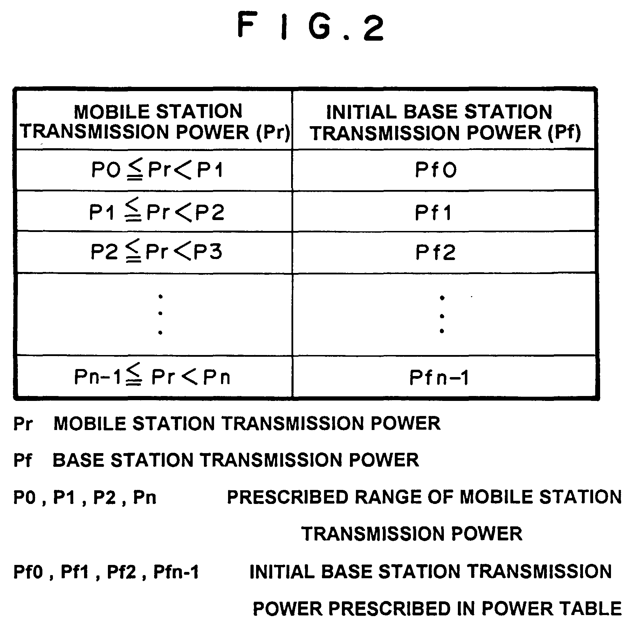

Next, referring to Figures 1 and 2, the action of the power control system of the present invention is explained. The embodiment of the present invention is based on the access method of a mobile station by using CDMA mobile communication system described in IS-95-A+TSB74.

At the beginning of communication by the mobile station, transmission power controller 18 of the mobile station adjusts the gain of variable gain transmission amplifier 17 on the basis of the mobile station transmission power Pr calculated by the method prescribed in IS-95-A+TSB74, and add the Pr data in the prescribed position in an access message by using encoder 19. The access message including the Pr data is transmitted through a control channel to the base station.

When the mobile station does not receive any response to the access message from any base station in a prescribed period of time after the transmission of the access message, the mobile station increases the mobile station transmission power by the prescribed amount to transmit another access message. The Pr is minimum power necessary for the communication, because access messages are repeatedly transmitted, by increasing the mobile station transmission power by the prescribed amount. On the other hand, transmitter-receiver of base station 101 stores beforehand in memory 10 the power table which is allowed the mobile station transmission power Pr and the base station transmission power Pf .

An example of the power table is shown in Figure 2, wherein the base station transmission power Pf is arranged on the basis of the mobile station transmission power Pr. There is a relation P0 < P1 < P2 < · · · < Pn, where P0, P1, P2, and Pn stand for transmission power. The initial value of the base station transmission power Pf is calculated by the conventional method on the basis of the size of service areas covered by the base station.

The base station receives an access message for the first time, when the mobile station transmission power of transmitter-receiver of mobile station 102 exceeds the critical receiving level of transmitter-receiver of base station 101.

Initial transmission power calculator 9 calculates the base station transmission power Pf, referring to the power table stored in memory 10, reading out the mobile station transmission power Pr from the access message by using decoder 5. For example, if P2 < Pr < P3, the base station transmission power Pf is Pf2.

Then, the base station transmits an access message response to the mobile station, by adjusting the gain of variable gain transmission amplifier 2 by using transmission power controller 8.

Hereinafter, the base station transmission power is tuned finely by the method employed by IS-95-A+TSB74.

The error rate which is measured by error rate counter 16 and is incorporated into the transmission data by encoder 19 in the mobile station is transmitted periodically to the base station which reads out the error rate by using decoder 5 and then increases or decreases the gain of variable gain transmission amplifier 2 by using transmission power controller 8.

The mobile station notifies the base station of the mobile station transmission power Pr together with the error rate at the first time of the communication. The base station responds to the mobile station by increasing or decreasing the base station transmission power Pf given in the power table

Therefore, The Pf from the base station is decided accurately. Furthermore, the power control system of the present invention suppresses the interference power to other communication channel and prevents the interference from other station by communicating with the optimum transmission power from a base station in a communication channel assigned to a mobile station, whereby the communication quality is improved and the capacity of communication channel is increased.

Although the present invention has been shown and described with respect to the best mode embodiment thereof, it should be understood by those skilled in the art that the foregoing and various other changes, omissions, and additions in the form and detail thereof may be made therein without departing from the spirit and scope of the present invention.

## Claims

1. A method of transmission power control in mobile communication system which comprises the steps of:
transmitting, at first by using a prescribed power, from a mobile station to a base station an access message for requesting a beginning of communication, and then by increasing the power, until said mobile station receives a response from said base station to said access message;
beginning the communication after receiving said response; and
reporting a report of the receiving state to said base station,
wherein the value of the power of transmitting said access message is added to said access message, and the power of transmission from said base station is decided on the basis of said report.

2. The method of transmission power control in mobile communication system according to claim 1, wherein the transmission power from said base station is decided by said base station by referring to a power table which is allowed the transmission power of said mobile station and the prescribed transmission power of said base station to correspond to each other.

3. The method of transmission power control in mobile communication system according to claim 1, wherein the transmission power from said base station is decided on the basis of said report, by referring to a power table which is allowed the transmission power of said mobile station and a prescribed transmission power of said base station to correspond to each other.

4. The method of transmission power control in mobile communication system according to claim 1, wherein code division multiple access (CDMA) signals are employed.

5. A base station in code division multiple access (CDMA) for a mobile communication system which comprises:
a receiving means for receiving a notification of transmission power from a mobile station;
a memory for storing a table which is allowed the transmission power of said mobile station and a prescribed transmission power of said base station to each other; and
an initial transmission power calculator for deciding the transmission power of said base station on the basis of said table.

6. A mobile station in code division multiple access (CDMA) for a mobile communication system which comprises:
a decoder for decoding signals; and
a transmission power controller for controlling the transmission power of said mobile station,
wherein both communication signals and the value of transmission power are inputted into said decoder , and the output from said decoder is transmitted through an antenna of said mobile station.

7. The mobile station in code division multiple access (CDMA) for a mobile communication system according to claim 6, wherein an error rate of received signal from a base station is inputted into said decoder.
